# EUROPEAN PATENT SPECIFICATION

(11) **EP 0 334 470 B1**
(45) Date of publication and mention of the grant of the patent: **03.11.1993**
(21) Application number: 89300968.8
(22) Date of filing: 01.02.1989
(51) Int. Cl.: G03B 3/10

(54) **Interchangeable lens devices**
Wechselobjektif-Mechanismus
Objectifs interchangeables

(30) Priority: 26.02.1988 JP 42274/88
(43) Date of publication of application: 27.09.1989
(73) Proprietor: SONY CORPORATION, Tokyo 141 (JP)
(72) Inventor: Takada, Shinji c/o Patents Division, Shinagawa-ku Tokyo 141 (JP)
(74) Representative: Thomas, Christopher Hugo

(56) References cited:
- EP-A- 0 238 111
- DE-A- 3 611 784
- US-A- 4 404 595
- US-A- 4 443 085
- US-A- 4 616 264
- PATENT ABSTRACTS OF JAPAN vol. 8, no. 60, 22th March 1984 (P-262) (1497) & JP-A-58 211124
- idem

## Description

This invention relates to cameras.

Interchangeable lens devices for video and other cameras are well known. It has been proposed, in such cameras, to detect optical information within the camera body and relating for example to focusing or the amount of transmitted light, and to control functions of an imaging lens assembly in the interchangeable lens device on the basis of this optical information, for example, so as to effect auto-focusing and/or automatic exposure control. To achieve such automatic control of functions of the lens assembly, sensors are provided within the camera body for sensing the optical information, whereupon a drive voltage based on the sensed optical information is supplied to the lens device for operating a drive motor by which a function of the lens assembly, such as the focusing or exposure, is automatically adjusted. See, for example, our US patent specifications US-A-4 609 944 and US-A-4 471 383.

In a previously proposed camera in which a drive voltage is supplied from the camera body to an interchangeable lens device for operating a drive motor therein by which a respective function of an imaging lens assembly is adjustably controlled, it is necessary to provide a current conducting path, including respective electrical contacts at an interface between the camera body and the lens device, for each of the several adjustable functions of the lens assembly, for example, for the auto-focusing and automatic exposure control functions. Therefore, as the number of automatic functions is increased, the number of current conducting paths or channels between the camera body and the lens device has to be correspondingly increased, leading to increased size and cost of the camera. Moreover, the characteristics of the drive motors included in the several lens devices intended to be used interchangeably with one camera body may be substantially different, due to differences in the focal lengths or weights of the respective lens assemblies. This makes it difficult to effect the optimum control of the various lens assemblies.

US patent specification US-A-4 404 595 discloses a camera having features corresponding to those of the pre-characterizing part of claim 1.

According to the present invention there is provided a camera comprising:
a main camera body including:
main signal processing means; and
an interchangeable lens device including:
imaging lens means having elements which are controllable for adjusting respective functions thereof;
an electric motor for each of said functions and operative to drive the respective controllable elements;
sensing means for sensing the positions of said controllable elements established by the respective electric motor and for supplying corresponding position information; and
auxiliary signal processing means operative to control said electric motor in response to position control signals supplied from said main signal processing means, and to supply sensed position signals to said main signal processing means in response to said position information;
characterized by:
optical transmission means for transmitting and receiving said position control signals and said sensed position signals.

The invention will now be described by way of example with reference to the accompanying drawings, throughout which like parts are referred to by like references, and in which:
Figure 1 is a block diagram of an embodiment of video camera according to the present invention;
Figures 2A to 2D are diagrammatic views illustrating the format of signals transmitted in the video camera of Figure 1;
Figures 3A to 3D are timing charts for explaining the timed relationship of the transmission signals between the camera body and the lens device of Figure 1 in respect of vertical synchronizing signals;
Figures 4A and 4B are elevational views of mounting surfaces of an interchangeable lens device and a camera body; and
Figures 5A and 5B, taken together, illustrate a flow chart to which reference will be made in explaining the operation of the camera of Figure 1.

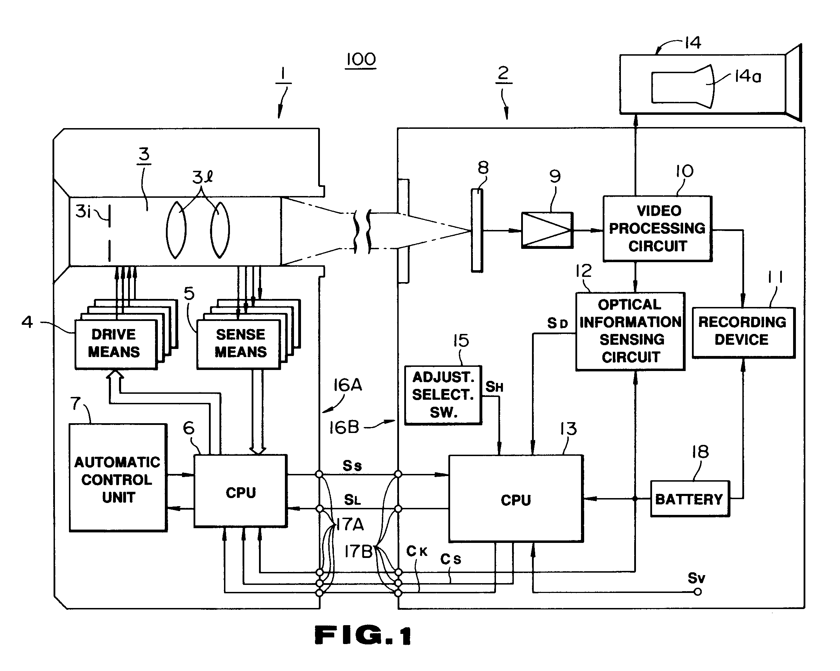

Referring initially to Figure 1, a video camera 100 includes an interchangeable lens device 1 and a camera body 2 to which the lens device 1 is removably attached so as to be interchangeable with other similar lens devices (not shown). The lens device 1 includes an imaging lens assembly 3 having a plurality of imaging lenses 3l, at least some of which are movable relative to the others in the axial direction, that is, in the direction of the optical axis of the lens assembly 3, for adjusting functions of the lens assembly 3. More specifically such relative movements of the lenses 3l in the direction of the optical axis have the function of adjusting the focus, and/or adjusting the focal length (zooming). The lens assembly 3 has a diaphragm mechanism 3i having movable iris blades (fins) for adjusting the amount of light permitted to pass through the lenses 3l, that is, for effecting exposure adjustment or iris control.

The lenses 3l are axially displaced relative to each other for effecting focus adjustment and/or zooming by a mechanism (not shown) responsive to manual rotation of an associated adjustment ring and, similarly, the iris blades are displaced by a suitable mechanism (not shown) in response to manual rotation of an adjustment ring for effecting exposure adjustment. The lenses 3l and the movable elements of the diaphragm mechanism 3i can also be driven and controlled by drive means 4 comprising respective electric motors for controlling the respective adjustment functions. In other words, individual motors are provided in the drive means 4 for effecting the focusing adjustment, the zooming adjustment and the exposure adjustment, respectively.

Each lens device 1 further includes sensors 5 which sense the positions of the elements controlled or driven by the several motors, respectively, of the drive means 4. Thus, sensors 5 are provided for sensing the positions of the lenses 3l and the movable iris blades by which the drive motors effect respective focus, zoom and exposure adjustments. The motors of the drive means 4 are controlled by a microprocessor or CPU 6 included in the respective lens device 1 and receiving position information from the sensors 5. Moreover, the CPU 6 has stored therein information identifying the respective lens device 1 and the characteristics thereof, for example, information concerning the focal length or aperture of the lens assembly 3 and/or information concerning the motors of the drive means 4.

An automatic control unit 7, for example, of the type employing a focal point sensor, may also be provided in the lens device 1, and is connected to the respective CPU 6 for automatically effecting adjustment of the respective function, for example, for effecting auto-focusing through suitable operations of the motors of the drive means 4.

The camera body 2 includes an imaging element 8, for example, in the form of a charge coupled device (CCD), which is situated at the focal point of the lens assembly 3 of the lens device 1. The imaging element 8 is operative to convert an image projected thereon by the lens assembly 3 into corresponding video signals which are supplied through an amplifier 9 and a video processing circuit 10 to a video recording device 11, such as, a video tape recorder (VTR). The video signals are also supplied from the processing circuit 10 to an optical information sensing circuit 12 which, on the basis of the received video signal, senses the optical condition of the corresponding projected image, for example, the degree of focus and/or the amount of light therein. The sensing circuit 12 provides condition sensing signals SD which are characteristic of those conditions of the image projected on the imaging element 8, and which are supplied to a microprocessor or CPU 13 included in the camera body 2. For sensing or detecting the degree of focus of the image projected on the imaging element 8, the sensing circuit 12 may detect the level of the high frequency component of the video signal supplied by the imaging element 8 as a measure of the focused state. In other words, the level of the high frequency component of the video signal is maximized at the fully focused state of the image projected on the imaging element 8. On the other hand, the amount of light in the image projected on the imaging element 8 may be sensed by the sensing circuit 12 by detecting the level of the video signal, as a whole. The video signal obtained from the processing circuit 10 is further supplied to an electronic viewfinder 14 which includes a CRT 14a at which the image projected on the imaging element 8 can be monitored.

The camera body 2 is further provided with adjustment selector switches 15 which are manually actuable by respective push-buttons (not shown) for supplying selected function adjustment signals SH to the CPU 13. Such selected function adjustment signals or commands are provided, at the operator's option and irrespective of the state of the video signals, and hence of the condition sensing signals SD, for obtaining desired adjustments of the functions of the lens assembly 3, for example, for effecting zooming.

The CPU 13 further receives sensed position signals SS which are supplied by the CPU 6 of the lens device 1 in response to the position information supplied to the CPU 6 by the respective sensors 5. On the basis of the condition sensing signals SD, the selected function adjustment signals SH and the sensed position signals SS supplied to the CPU 13, it produces corresponding position control signals SL which are supplied to the CPU 6 to cause it suitably to control the motors of the drive means 4 for obtaining desired adjustments of the functions of the lens assembly 3. The sensed position signals SS supplied from the CPU 6 to the CPU 13 further contain the information stored in the CPU 6 for identifying the respective lens device 1 and the characteristics thereof.

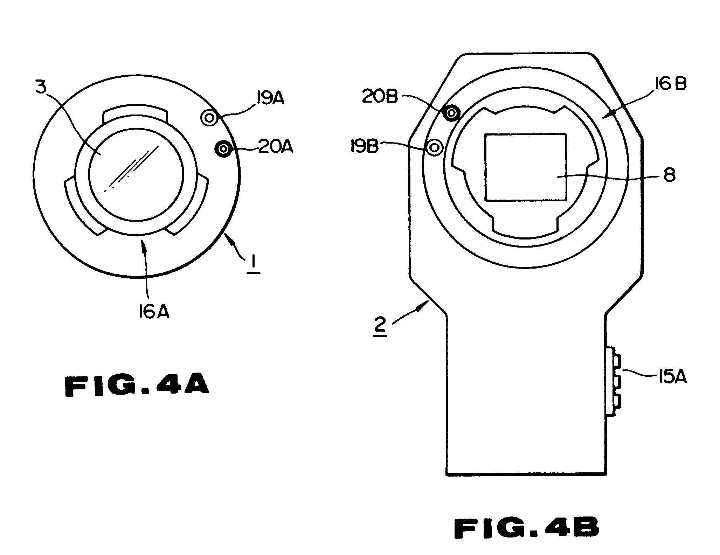

As shown in Figures 1, 4A and 4B, each lens device 1 and the camera body 2 have mating surfaces 16A and 16B which interface when the lens device 1 is mounted on the camera body 2. The mating surface 16A of the lens device 1 is provided with a light emitting element 19A and a light receiving element 20A, and the corresponding or mating surface 16B of the camera body 2 is provided with a light emitting element 19B and a light receiving element 20B. When the surfaces 16A and 16B mate with each other upon mounting of the lens device 1 on the camera body 2, the light emitting element 19A registers with the light receiving element 20B for forming a so-called photo-coupler therewith, and the light emitting element 19B similarly registers with the light receiving element 20A for forming another photo-coupler therewith. The light emitting elements 19A and 19B emit light in a pulsed manner in accordance with the transmitted sensed position signal SS and position control signal SL, respectively, and the light thus emitted is received by the light receiving elements 20B and 20A, respectively, for transmitting the signals SS and SL to the CPUs 13 and 6, respectively, in the camera body 2 and the lens device 1. This optical signal transmission is effective to avoid signal transmission errors that may occur due to poor electrical contact or shorting when using electrical transmission.

Vertical synchronizing signals SV which may, for example, be formed from the video signals in the processing circuit 10 are supplied to the CPU 13 which, in turn, supplies a chip select signal CS synchronized with the vertical synchronizing signal SV. The CPU 13 also supplies clock signals CK which, as described in detail below, are optically transmitted, in synchronism with the chip select signal CS, from the CPU 13 to the CPU 6 for a purpose described in detail below. An electrical source, for example, a battery 18, is provided in the camera body 2 for supplying suitable electrical power to the CPU 13 and other operating components of the camera body 2, and also for supplying electric power, through respective engaged contact 17A and 17B, to the CPU 6 of the lens device 1 mounted on the camera body 2.

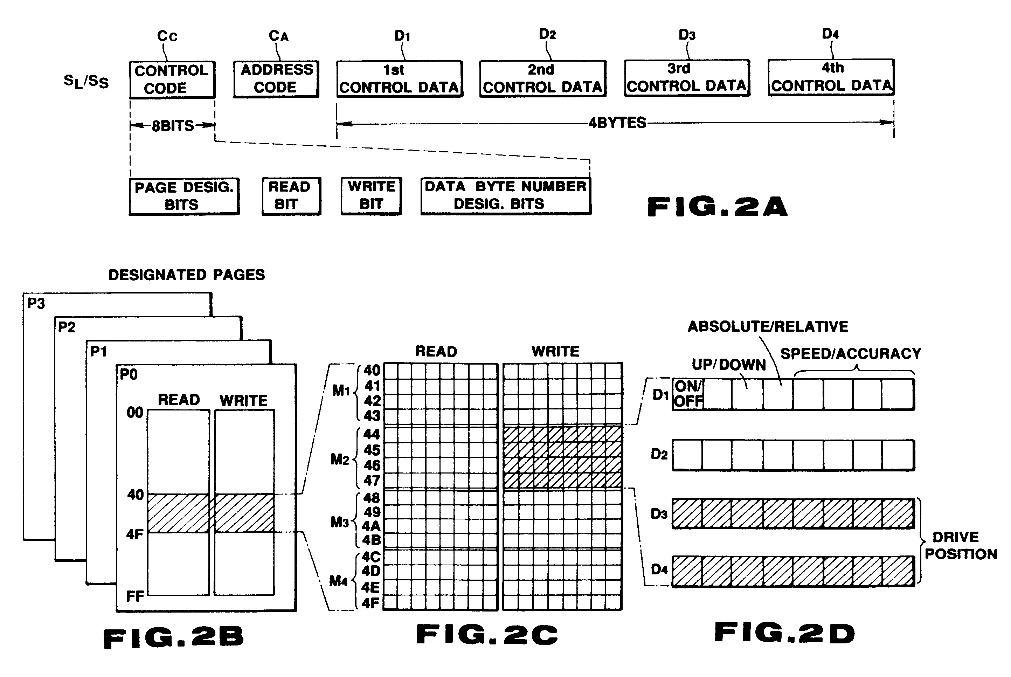

Referring now to Figure 2A, the position control signals SL transmitted from the CPU 13 of the camera body 2 to the CPU 6 of a lens device 1 mounted thereon comprise a control code CC, an address code CA and a first to fourth control data D1, D2, D3 and D4 which total four bytes. The sensed position signals SS transmitted from the CPU 6 to the CPU 13 have a format similar to that of the signals SL with the specific differences mentioned below. The control code CC is formed of eight bits including two page designating bits, one read bit, one write bit, and the data byte number designating bits. Each page designated by the control code CC is divided into four pages P0, P1, P2, P3, as shown in Figure 2B. Each of the pages P0 to P3 is provided with respective read data and write data regions, and each of the pages P0 to P3 is correlatively associated. For example, the page P0 may be reserved for information characterizing the lens device 1, such as, the focal length, aperture ratio, zooming range and/or maker ID number, while the page P1 may be reserved for the position control signal SL or the sensed position signal SS, as the case may be. The page P2 may be reserved for the maker's or manufacturer's special data, such as the lot number and date manufactured, while the page P3 may be reserved for additional data that may be used in the future. The read bit of the control code CC indicates transmission of a sensed position signal SS from the lens device 1 to the camera body 2, while the write bit of the control code CC indicates the transmission of a position control signal SL from the camera body 2 to the lens device 1. The read and write bits respectively designate the read and write data regions of the designated pages. Finally, the data byte number designating bits are the end of the control code CC indicate the number of bytes of the data that is transmitted.

The address code CA of a sensed position signal SS or position control signal SL contains data identifying hexadecimal addresses 00H to FFH as indicated by H, for each of the read and write data regions indicated in Figure 2B. More particularly, the address code CA indicates, by its addresses, the data to be transmitted in the read data region of the case of a sensed position signal SS, or the data to be transmitted in the write data region in the case of a position control signal SL. For example, the address code CA may indicate the transmission of data at the addresses 40H to 4FH, as indicated in Figures 2B and 2C.

By way of example, if it is assumed that the drive means 4 in the lens device 1 is provided with four drive motors M1, M2, M3 and M4, respectively, associated with respective adjustment functions of the lens assembly 3, and that four of the sensors 5 are provided for sensing the positions of the elements driven by the motors M1 to M4 for adjusting the respective functions, four bytes of control data D1, D2, D3 and D4 at the addresses 40H to 43H constitute the position control signal SL for the first motor M1 or the sensed position signal SS associated with the motor M1. Similarly, four bytes of data D1 to D4 at the addresses 44H to 47H of the write data region constitute a position control signal SL for the motor M2, whereas four bytes of data at the addresses 44H to 47H in the read data region constitute a sensed position signal SS for the same motor M2. Correspondingly, four bytes of data at the addresses 48H to 4BH of the write and read data regions, and four bytes of data at the addressed 4CH to 4FH of the write and read data regions provide position control signals SL and sensed position signals SS for the motors M3 and M4, respectively.

In the write mode, that is, in the case of a position control signal SL, one bit of the data D1 indicates whether the respective one of the motors of the drive means 4, for example, the motor M2 in Figures 2C and 2D, should be operated, one bit indicates the direction in which the drive motor M2 is to be operated, that is UP or DOWN, one bit indicates whether the position to which the drive is to be displaced by the motor M2 in response to the transmitted position control signal SL is indicated in absolute or relative terms, and four bits indicate the speed with which the respective motor M2 is to be operated. The sixteen bits of the third and fourth bytes of the control data D3 and D4 indicate the position to which the motor M2 is to displace the respective element of the lens assembly 3 for achieving the desired adjustment of the function of the lens assembly 3 in response to the transmitted position control signal SL. The byte of data D2 represents a reserve or spare data region.

In the read mode, that is, in the case of a sensed position signal SS, the last four bits of the data D1 (which indicate the drive speed in the case of a position control signal SL) are employed to represent the bit number, and hence the adjustment accuracy, of the data D3 and D4, and hence the accuracy with which the respective function of the lens assembly 3 in the lens device 1 can be adjusted.

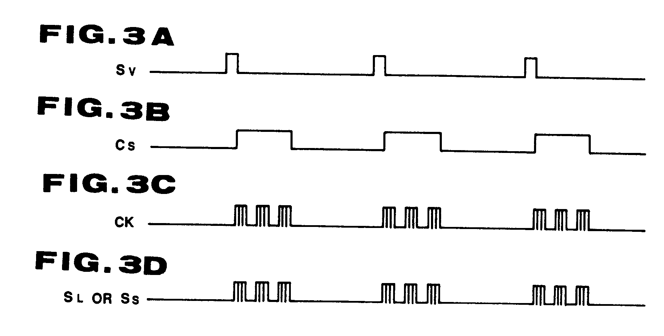

Transmission of the signals SS and SL between the CPU 6 in the lens device 1 and the CPU 13 in the camera body 2 is preferably synchronized with the vertical synchronizing signals SV derived from the video signals in the processing circuit 10. More particularly, as shown in Figure 3B, the chip select signals CS are supplied by the CPU 13 in synchronization with the vertical synchronizing signals SV (Figure 3A), and the position control signals SL and the sensed position signals SS are transmitted between the CPUs 6 and 13 only during the chip select signals CS, as shown in Figure 3D. Moreover, as shown in Figure 3C, the reference clock signal CK is also transmitted in synchronism with the chip select signals CS.

When the signals SL and SS are transmitted between the CPUs 6 and 13 only during the chip select signals CS, the CPUs 6 and 13 only need to monitor whether the signals SL and SS are being transmitted during the periods of the chip select signals CS. During the intervals between the chip select signals CS, the CPUs 6 and 13 are free to effect control of the motors of the drive means 4, and to effect the arithmetic operations based on the previously transmitted signals. This simplifies the software that is required and reduces the labour involved in programming and/or debugging. Also, the signal processing speed is increased and the timing of the signal transmission is clearly defined, so that signal transmission errors can be readily detected and more accurate signal transmission can be achieved.

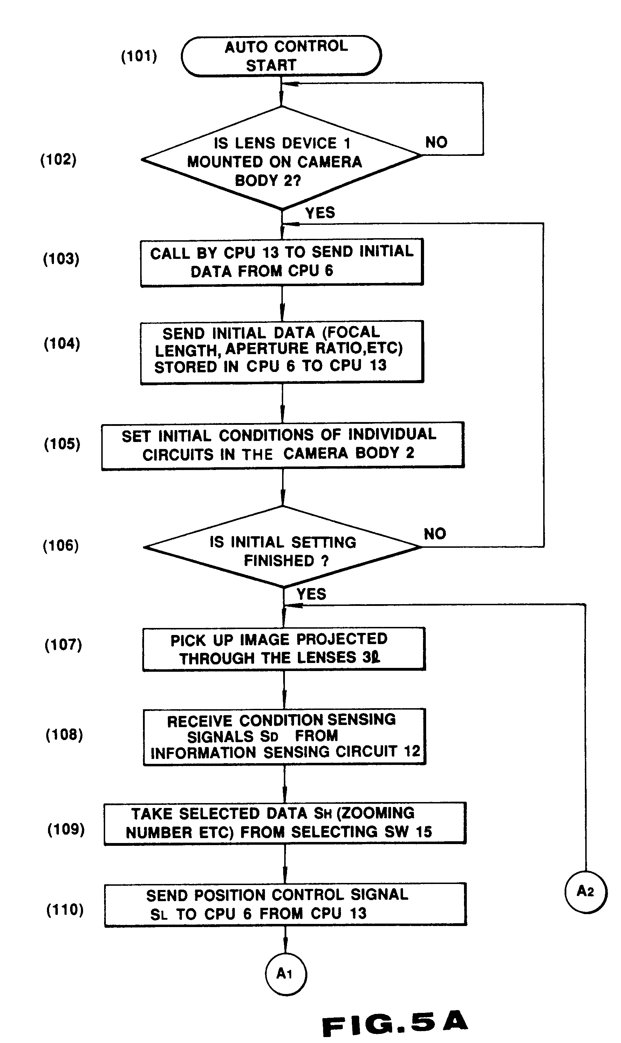

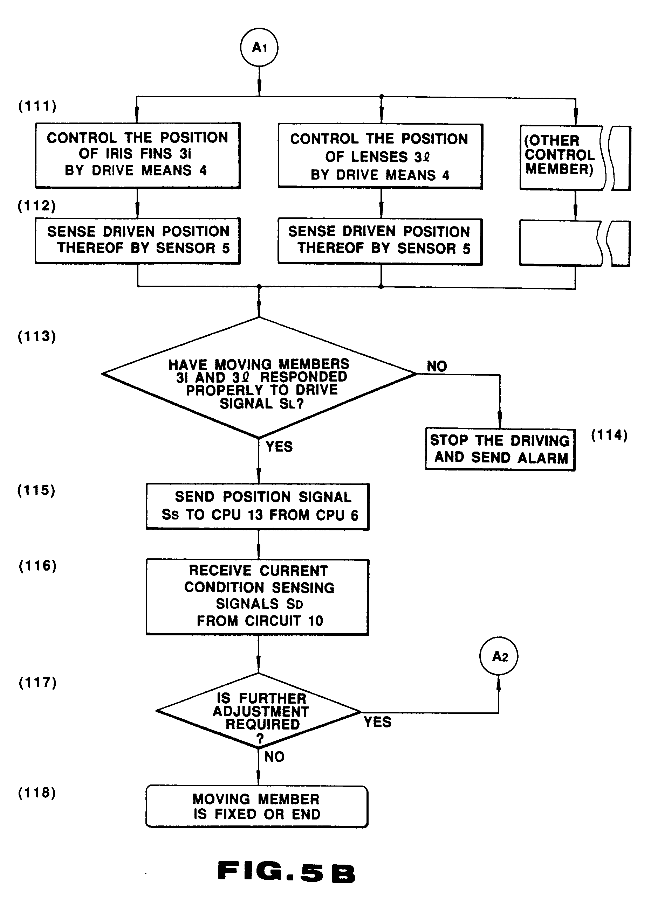

The operation of the video camera 100 will now be described with reference to the flow chart of Figures 5A and 5B. Upon the initiation of the automatic control of the camera 100 in the step (101), the program of the CPU 13 advances to the decision step (102) in which it is determined whether or not a lens device 1 is mounted on the camera body 2. If so, the program moves to the step (103) in which the CPU 13 issues a call for the transmission to it of the initial data from the CPU 6 in the lens device 1. In response to such call, the CPU 6 is made operative in the next step (104) to transmit to the CPU 13 the initial data stored in the CPU 6, and which identifies the respective lens device 1 and the characteristics thereof. It should be noted that, in the call by the CPU 13 to the CPU 6 constituting the step (103), predetermined addresses in the read data region of the page P0 are specified and, in response thereto, the respective first to fourth data D1, D2, D3 and D4 are transmitted from the CPU 6 of the lens device 1 to the CPU 13 of the camera body 2. Therefore, in the step (104), information characteristic of the lens device 1 actually in use, such as, the focal length, aperture ratio, presence or absence of the automatic control unit 7, and the number of motors included in the drive means 4, is fetched into the CPU 13 of the camera body 2.

In response to the reception in the CPU 13 of the initial data from the CPU 16, the initial conditions of the various circuits in the camera body 2 are suitably set in the step (105) so as to accommodate such circuits to the characteristics of the lens device 1 mounted on the camera body 2. In the following decision step (106), it is determined whether or not the initial setting of the circuits in the camera body 2 has been completed. If not, the program returns to the step (103) for calling upon the CPU 6 either to resend the initial data, or to send further initial data to the CPU 13. If the initial setting of the circuits in the camera body 2 is determined to be completed in the step (106), the program advances to the step (107) in which the image projected through the lenses 31 is picked up by the imaging element 8, and the resulting video signal is supplied through the processing circuit 10 to the sensing circuit 12. In the next step (108), the sensing circuit 12 senses the optical conditions of the projected image from the corresponding video signal, and the resulting condition sensing signals SD supplied by the sensing circuit 12 are received by the CPU 13. Thereupon, in the step (109) the CPU 13 takes from the selector switches 15 the selected further adjustment signals SH which, for example, indicate a zoom setting (zooming number) or the like desired by the operator of the camera 100.

In response to the condition sensing signals SD received from the sensing circuit 12 and the selected function adjustment signals SH received from the selecting switches 15, the CPU 13 of the camera body 2 generates a corresponding position control signal SL which is transmitted to the CPU 6 in the step (110). This position control signal SL specifies prescribed addresses of the write data region of the page P1 for operating the one of the drive motor M1 to M4 associated with the function to be adjusted. Thus, the CPU 6, in the step (111), suitably drives and controls a motor of the drive means 4, for example, for adjusting the positions of the iris blades of the diaphragm mechanism 3i, or for adjusting the positions of the lenses 31.

During the operation of one or more of the motors of the drive means 4 under the control of the CPU 6 in response to the position control signal SL, the sensors 5 continuously detect the changing positions of the respective movable elements of the lens assembly 3 and corresponding sensed position signals SS are returned by the CPU 6 to the CPU 13. In the event that the movable elements of the lens assembly 3 to be driven do not, in fact, move in accordance with the position control signal SL transmitted to the CPU 6 in the step (110), for example, if the drive means 4 or the mechanism for manually adjusting a function of the lens assembly 3 is jammed, this fact is determined in the step (113). More specifically, if it is determined in the step (113) that the lenses 31 or the movable iris blades have not moved properly in response to the position control signal SL, the CPU 13 transmits a suitable signal SL to the CPU 6 for halting the operation of the drive means 4 and further actuates a suitable alarm in the step (114). Therefore, excess mechanical stressing and possible damage to the drive means 4 or other structures are avoided if the drive means 4 or the movable elements of the lens assembly 3 are, for any reason, jammed or otherwise rendered immovable.

On the other hand, if the movements of the lenses 31 and of the iris blades proceed properly in response to the position control signal SL, the program advances from the step (113) to the step (115) in which sensed position signals SS are transmitted from the CPU 6 to the CPU 13 which, in the step (116), is also receiving current condition sensing signals SD from the sensing circuit 12. In response to this, the CPU 13 determines, in the step (117), whether, on the basis of the most recently received sensed position signals SS from the CPU 6, the current condition sensing signals SD from the sensing circuit 12 and the selected functional adjustment signals SH previously supplied from the selector switches 15, any further adjustment of the lens assembly 3 is required. If no further adjustment is required, that is, if the condition of the image projected on the imaging element 8 precisely corresponds to the positioning of the adjustable elements of the lens assembly 3 called for by the position control signals SL, the program advances to its terminal step (118) at which the movable element or elements of the lens assembly 3 are fixed. However, if it is determined by the CPU 13 in the step (117) that further adjustment is required, the program is returned to the step (107) and the subsequent steps are repeated until finally, no further adjustment is required. Thus, by the transmission of the signals SL and SS between the CPUs 6 and 13, adjustments of the various functions of the lens assembly 3, such as focusing, exposure and zooming adjustments are effected.

It will be seen that the provision of microprocessors or CPUs 6 and 13 in both the lens device 1 and the camera body 2 makes it possible to transmit between the camera body 2 and the lens device 1, signals SL and SS that merely indicate the extent of the desired adjustment of the function of the lens assembly 3 and the position thereof. Such signals are to be contrasted with signals for directly driving and controlling the drive motors included in the lens device 1. Moreover, by including the CPU 6 in the lens device 1 for actually controlling the motors of the drive means 4 therein, it is possible to effect the optimum drive control suited to the characteristics of the drive means 4 or the weight of the lens assembly 3 in the respective lens device 1, which may vary substantially from other lens devices 1 intended for use with the camera body 2.

## Claims

1. A camera (100) comprising:
a main camera body (2) including:
main signal processing means (13); and
an interchangeable lens device (1) including:
imaging lens means (3) having elements (3l, 3i) which are controllable for adjusting respective functions thereof;
an electric motor (4) for each of said functions and operative to drive the respective controllable elements (3l, 3i);
sensing means (5) for sensing the positions of said controllable elements (3l, 3i) established by the respective electric motor (4) and for supplying corresponding position information; and
auxiliary signal processing means (6) operative to control said electric motor (4) in response to position control signals supplied from said main signal processing means (13), and to supply sensed position signals to said main signal processing means (13) in response to said position information;
characterized by:
optical transmission means (19, 20) for transmitting and receiving said position control signals and said sensed position signals.

2. A camera (100) according to claim 1 wherein said controllable elements (3l, 3i) include an assembly of lens elements (3l) movable axially relative to each other for changing the focal length and focal position of said assembly as two of said functions to be adjusted.

3. A camera (100) according to claim 2 wherein said controllable elements (3l, 3i) further include adjustable diaphragm members (3i) for effecting exposure adjustment as one of said functions to be adjusted.

4. A camera (100) according to claim 1 wherein said main camera body (2) further includes a source of vertical synchronizing signals (10), and said auxiliary and main signal processing means (6, 13) effect optical transmission of said position control signals and said sensed position signals therebetween in synchronism with said vertical synchronizing signals.

5. A camera (100) according to claim 4 wherein said transmission of the position control signals and the sensed position signals is effected intermittently, and said electric motors (4) are operated to drive said respective controllable elements (3l, 3i) of said lens device (1) only during intervals between successive intermittent transmissions of said position control and sensed position signals.

6. A camera (100) according to claim 1 wherein said main camera body (2) further includes imaging means (8) for deriving a video signal corresponding to an image projected onto said imaging means (8) by said imaging lens means (3), means (12) responsive to said video signal for supplying to said main signal processing means (13) condition sensing signals characteristic of respective conditions of said image projected on said imaging means (8), and manually actuable selector means (15) for supplying selected function adjustment signals to said main signal processing means (13), said main signal processing means (13) determining said position control signals applied to said auxiliary signal processing means (6) on the basis of said selected function adjustment signals and said condition sensing signals in addition to said sensed position signals.

7. A camera (100) according to claim 6 wherein said main signal processing means (6) stores information identifying the respective said lens device (1) and characteristics of the latter, and said sensed position signals supplied from said auxiliary signal processing means (6) to said main signal processing means (13) contain said information identifying the respective said lens device (1) and said characteristics thereof.

8. A camera (100) according to claim 6 wherein said controllable elements (3l, 3i) of said imaging lens means (3) include an assembly of relatively axially movable lens elements (31) for changing the focal length and focal position of said assembly (3) as said functions to be adjusted, and said condition sensing signals are characteristic of the focused condition of said image projected onto said imaging means (8).

9. A camera (100) according to claim 6 wherein said controllable elements (3l, 3i) of said imaging lens means (3) include adjustable diaphragm members (3i) for effecting exposure adjustment as said function to be adjusted, and said condition sensing signals are characteristic of the amount of light included in said image projected onto said imaging means (8).

10. A camera (100) according to claim 6 wherein said lens device (1) further includes automatic control means (7) connected with said auxiliary signal processing means (6) for adjusting said respective functions of said imaging lens means (3).

## Patentansprüche

1. Kamera (100), die umfaßt:
ein Hauptkameragehäuse (2), das aufweist:
Hauptmittel (13) zur Signalverarbeitung; und
eine Wechsellinseneinrichtung (1), die aufweist:
Abbildungslinsenmittel (3), die Elemente (3l, 3i) haben, die steuerbar sind, um ihre entsprechenden Funktionen einzustellen;
einen Elektromotor (4) für jede der genannten Funktionen, der betriebsfähig ist, die entsprechenden steuerbaren Elemente (3l, 3i) anzutreiben;
Abtastmittel (5) zum Abtasten der Positionen dieser steuerbaren Elemente (3l, 3i), die durch den entsprechenden Elektromotor (4) eingerichtet sind, und zum Liefern der entsprechenden Positionsinformation; und
Hilfsmittel (6) zur Signalverarbeitung, die betriebsfähig sind, den genannten Elektromotor (4) als Antwort auf die Positionssteuersignale zur steuern, die von den Hauptmitteln (13) zur Signalverarbeitung geliefert werden, und die abgetasteten Positionssignale zu den Hauptmitteln (13) zur Signalverarbeitung als Antwort auf die Positionsinformation zu liefern;
**gekennzeichnet durch**:
optische Übertragungsmittel (19, 20) zur Übertragung und zum Empfang der Positionssteuersignale und der abgetasteten Positionssignale.

2. Kamera (100) nach Anspruch 1, wobei die steuerbaren Elemente (3l, 3i) einen Aufbau von Linsenelementen (31) aufweisen, die axial relativ zueinander bewegbar sind, um die Brennweite und die Fokusposition des Aufbaus als zwei der einzustellenden Funktionen zu ändern.

3. Kamera (100) nach Anspruch 2, wobei die steuerbaren Elemente (3l, 3i) weiter einstellbare Blendenelemente (3i) aufweisen, um die Belichtungseinstellung als eine der einzustellenden Funktionen auszuführen.

4. Kamera (100) nach Anspruch 1, wobei das Hauptkameragehäuse (2) weiter eine Quelle von vertikalen Synchronsignalen (10) aufweist, und wobei die Hilfs- und Hauptmittel (6, 13) zur Signalverarbeitung eine optische Übertragung der Positionssteuersignale und der abgetasteten Positionssignale zwischen ihnen synchron mit den vertikalen Synchronsignalen ausführen.

5. Kamera (100) nach Anspruch 4, wobei die Übertragung der Positionssteuersignale und der abgetasteten Positionssignale intermittierend ausgeführt wird, und wobei die Elektromotore (4) betrieben werden, um die entsprechenden steuerbaren Elemente (3l, 3i) der Linseneinrichtung (1) nur während der Intervalle zwischen aufeinanderfolgenden intermittierenden Übertragungen der Positionssteuer- und der abgetasteten Positionssignale anzutreiben.

6. Kamera (100) nach Anspruch 1, wobei das Hauptkameragehäuse (2) weiter Abbildungsmittel (8) aufweist, um ein Videosignal herzuleiten, das einem Bild entspricht, das auf die Abbildungsmittel (8) durch die Abbildungslinsenmittel (3) projiziert wird, Mittel (12), die auf das Videosignal antworten, um zu den Hauptmitteln (13) zur Signalverarbeitung Zustandsabtastsignale zu liefern, die für die jeweiligen Zustände des Bildes charakteristisch sind, das auf die Abbildungsmittel (8) projiziert wurde, und manuell betätigbare Auswahlmittel (15), um ausgewählte Funktionseinstellsignale zu den Hauptmitteln (13) zur Signalverarbeitung zu liefern, wobei die Hauptmittel (13) zur Signalverarbeitung die Positionssteuersignale bestimmen, die an die Hilfsmittel (6) zur Signalverarbeitung auf der Grundlage der ausgewählten Funktionseinstellsignale und der Zustandsabtastsignale zusätzlich zu den abgetasteten Positionssignalen angelegt werden.

7. Kamera (100) nach Anspruch 6, wobei die Hauptmittel (6) zur Signalverarbeitung die Information speichern, die die entsprechende Linseneinrichtung (1) und ihre Kenndaten identifizieren, und wobei die abgetasteten Positionssignale, die von den Hilfsmitteln (6) zur Signalverarbeitung zu den Hauptmitteln (13) zur Signalverarbeitung geliefert werden, die Information enthalten, die die entsprechend Linseneinrichtung (1) und deren Kenndaten identifiziert.

8. Kamera (100) nach Anspruch 6, wobei die steuerbaren Elemente (3l, 3i) der Abbildungslinsenmittel (3) einen Aufbau von axial gegenseitig bewegbaren Linsenelementen (3l) aufweisen, um die Brennweite und die Fokusposition des Aufbaus (3) als die genannten einzustellenden Funktionen zu ändern, und wobei die Zustandsabtastsignale charakteristisch für den fokussierten Zustand des auf die Abbildungsmittel (8) projizierten Bildes sind.

9. Kamera (100) nach Anspruch 6, wobei die steuerbaren Elemente (3l, 3i) der Abbildungslinsenmittel (3) einstellbare Blendenelemente (3i) aufweisen, um die Belichtungseinstellung als einzustellende Funktion auszuführen, und wobei die Zustandsabtastsignale charakteristisch für die Lichtmenge sind, die im Bild vorhanden ist, das auf die Abbildungsmittel (8) projiziert wird.

10. Kamera (100) nach Anspruch 6, wobei die Linseneinrichtung (1) weiter automatische Steuermittel (7) aufweist, die mit den Hilfsmitteln (6) zur Signalverarbeitung verbunden sind, um die entsprechenden Funktionen der Abbildungslinsenmittel (3) einzustellen.

## Revendications

1. Caméra (100) comprenant :
un corps principal d'appareil (2) incluant :
un moyen principal de traitement de signaux (13) ; et,
un objectif interchangeable (1) comprenant un moyen d'objectif de formation d'image (3) comportant des éléments (3*l*, 3i) qui peuvent être commandés pour régler leurs fonctions respectives ;
un moteur électrique (4) pour chacune desdites fonctions et qui sert à entraîner les éléments pouvant être commandés (3*l*, 3i) respectifs ;
un moyen de détection (5) pour détecter les positions desdits éléments pouvant être commandés (3*l*, 3i) établies par le moteur électrique respectif (4) et pour délivrer l'information de position correspondante ; et,
un moyen auxiliaire de traitement de signaux (6) servant à commander ledit moteur électrique (4) en réponse aux signaux de commande de position délivrés par ledit moyen principal de traitement de signaux (13) et à délivrer les signaux de position détectée audit moyen principal de traitement de signaux (13) en réponse à ladite information de position ;
caractérisé par :
un moyen de transmission optique (19, 20) pour émettre et recevoir lesdits signaux de commande de position et lesdits signaux de position détectée.

2. Caméra (100) selon la revendication 1, dans laquelle lesdits éléments pouvant être commandés (3*l*, 3i) comprennent un ensemble de lentilles (3*l*) mobiles axialement les unes par rapport aux autres pour modifier la distance focale et la position focale dudit ensemble, en tant que deux desdites fonctions à régler.

3. Caméra (100) selon la revendication 2, dans laquelle lesdits éléments pouvant être commandés (3*l*, 3i) comprennent en outre des éléments diaphragmes réglables (3i) pour effectuer le réglage d'exposition, en tant que l'une desdites fonctions à régler.

4. Caméra (100) selon la revendication 1, dans laquelle ledit corps principal d'appareil (2) comprend en outre une source de signaux de synchronisation verticale (10), et dans laquelle lesdits moyens auxiliaire et principal de traitement de signaux (6, 13) effectuent la transmission optique desdits signaux de commande de position et desdits signaux de position détectée entre eux, en synchronisme avec lesdits signaux de synchronisation verticale.

5. Caméra (100) selon la revendication 4, dans laquelle ladite transmission des signaux de commande de position et des signaux de position détectée est effectuée de façon intermittente, et dans laquelle lesdits moteurs électriques (4) sont mis en oeuvre pour entraîner lesdits éléments pouvant être commandés (3*l*, 3i) respectifs dudit objectif (1) seulement pendant des intervalles entre les transmissions intermittentes successives desdits signaux de commande de position et de position détectée.

6. Caméra (100) selon la revendication 1, dans laquelle ledit corps principal d'appareil (2) comprend en outre un moyen de formation d'image (8) pour obtenir un signal vidéo correspondant à une image projetée sur ledit moyen de formation d'image (8) par ledit moyen d'objectif de formation d'image (3), un moyen (12) sensible audit signal vidéo pour délivrer audit moyen principal de traitement de signaux (13) des signaux de détection d'état, caractéristiques des états respectifs de ladite image projetée sur ledit moyen de formation d'image (8), et un moyen de sélection manoeuvrable manuellement (15) pour délivrer des signaux de réglage de fonction sélectionnée audit moyen principal de traitement de signaux (13), ledit moyen principal de traitement de signaux (13) déterminant lesdits signaux de commande de position appliqués audit moyen auxiliaire de traitement de signal (6) sur la base desdits signaux de réglage de fonction sélectionnée et desdits signaux de détection d'état, en plus desdits signaux de position détectée.

7. Caméra (100) selon la revendication 6, dans laquelle ledit moyen principal de traitement de signaux (13) mémorise l'information d'identification dudit objectif (1) respectif et les caractéristiques de ce dernier, et dans laquelle lesdits signaux de position détectée, délivrés à partir dudit moyen auxiliaire de traitement de signaux (6) audit moyen principal de traitement de signaux (13), contiennent ladite information d'identification dudit objectif (1) respectif et ses dites caractéristiques.

8. Caméra (100) selon la revendication 6, dans laquelle lesdits éléments pouvant être commandés (3*l*, 3i) dudit moyen d'objectif de formation d'image (3) comprennent un ensemble de lentilles (3*l*) mobiles axialement les unes par rapport aux autres pour modifier la distance focale et la position focale dudit ensemble (3) comme étant lesdites fonctions à régler, et dans laquelle lesdits signaux de détection d'état sont caractéristiques de l'état au point de ladite image projetée sur ledit moyen de formation d'image (8).

9. Caméra (100) selon la revendication 6, dans laquelle lesdits éléments pouvant être commandés (3*l*, 3i) dudit moyen d'objectif de formation d'image (3) comprennent, en tant que fonction à régler, des éléments de diaphragme réglables (3i) pour effectuer le réglage d'exposition, et dans laquelle lesdits signaux de détection d'état sont caractéristiques de la quantité de lumière incluse dans ladite image projetée sur ledit moyen de formation d'image (8).

10. Caméra (100) selon la revendication 6, dans laquelle ledit objectif (1) comprend en outre un moyen de commande automatique (7), relié audit moyen auxiliaire de traitement de signaux (6), pour régler lesdites fonctions respectives dudit moyen d'objectif de formation d'image (3).
